# EUROPÄISCHE PATENTSCHRIFT

(11) **EP 2 425 143 B1**
(45) Veröffentlichungstag und Bekanntmachung des Hinweises auf die Patenterteilung: **05.06.2013**
(21) Anmeldenummer: 11715479.9
(22) Anmeldetag: 13.04.2011
(51) Int. Cl.: F16D 65/00, F16D 65/04, F16D 65/092

(54) **VERFAHREN ZUM VERMINDERN BZW. VERMEIDEN VON RESONANZGERÄUSCHEN EINER REIBEINHEIT**
METHOD FOR REDUCING OR AVOIDING RESONANT NOISE OF A FRICTION UNIT
PROCÉDÉ PERMETTANT DE DIMINUER OU D'ÉVITER LES BRUITS DE RÉSONANCE D'UNE UNITÉ DE FRICTION

(30) Priorität: 16.04.2010 DE 102010027846
(43) Veröffentlichungstag der Anmeldung: 07.03.2012
(73) Patentinhaber: TMD Friction Services GmbH, 51381 Leverkusen (DE)
(72) Erfinder: HÖTZEL, Dominik, 40629 Düsseldorf (DE)
(74) Vertreter: Müller, Eckhard
(86) Internationale Anmeldenummer: PCT/EP2011/055849
(87) Internationale Veröffentlichungsnummer: WO 2011/128386

(56) Entgegenhaltungen:
- EP-A1- 1 619 404
- WO-A1-95/25912
- JP-A- 10 002 361
- US-A1- 2008 169 161
- US-A1- 2009 032 343

## Beschreibung

Die vorliegende Erfindung betrifft ein Verfahren zum Vermindern bzw. Vermeiden von Resonanzgeräuschen einer Reibeinheit, die eine Trägerplatte mit einem daran gehaltenen Reibbelag aufweist.

### Stand der Technik

Bei der Produktion von Reibeinheiten entstehen durch das Produktionsverfahren bedingt unterschiedliche Eigenfrequenzen. Diese haben negative Auswirkungen auf das spätere Geräuschverhalten in der entsprechenden Anwendung. Aus diesem Grund ist es bekannt, im Rahmen des Produktionsverfahrens an den Reibeinheiten Eigenfrequenzmessungen vorzunehmen. Diese sind jedoch nicht reproduzierbar aufgrund der vorhandenen Freiheitsgrade.

Die DE 199 03 757 A1 befasst sich mit der Problematik, die Geräuschentwicklung von Reibungsbremsen sowie Reibungskupplungen zu vermeiden. Dazu wird die Eigenfrequenz der Reibungsbremse oder Reibungskupplung dadurch eingestellt, dass in der Trägerplatte entsprechend dimensionierte Zungen (Resonatoren) ausgebildet werden.

Die DE 196 10 699 A1 beschreibt eine Kupplungsscheibe mit Reibbelag. Um störende Resonanzeffekte zu vermeiden, werden im Reibbelag entsprechende Vertiefungen, die unterschiedlich breit sein können, ausgebildet.

WO 95/25912 offenbart eine Reibeinheit, in der zum Vermeiden bzw. Verhindern von Resonanzgeräuschen kreisförmige Aussparungen oder Schlitze in den Reibbelag eingeformt werden. Das Einbringen der Aussparungen bzw. Schlitze erfolgt an den Stellen, an denen Kraftvektoren das wahrscheinlichste Auftreten von hörbaren Frequenzen anzeigen.

JP 10 002 361 A offenbart ein Verfahren zur Bestimmung der Eigenfrequenz einer unbearbeiteten Reibeinheit. Die Eigenfrequenz der bearbeiteten Reibeinheit wird anhand der Betrachtung des Gewichtsunterschieds zwischen einem Zielgewichtswert der bearbeiteten Reibeinheit und dem tatsächlichen Gewicht der Reibeinheit bestimmt.

### Aufgabe

Der vorliegenden Erfindung liegt die Aufgabe zugrunde, ein Verfahren anzugeben, mit dem die Reibeinheiten, wie sie in der Serie produziert werden, so einzustellen, dass sie insbesondere frei von Resonanzgeräuschen sind, auch unabhängig davon, welchen Fertigungstoleranzen die einzelnen Reibeinheiten der Serienproduktion unterliegen.

### Erfindung und vorteilhafte Wirkungen

Die vorliegende Aufgabe wird gelöst durch ein Verfahren zum Vermindern bzw. Vermeiden von Resonanzgeräuschen einer Reibeinheit, die eine Trägerplatte mit einem daran gehaltenen Reibbelag aufweist, bei dem das Eigenschwingungsverhalten der jeweiligen produzierten Reibeinheiten, bezeichnet als Kennfrequenzmessung, ermittelt wird und bei Auftreten von Resonanzgeräuschen eine mechanische Nachbearbeitung des Reibbelags erfolgt, wobei für die Nachbearbeitung auf eine Tabelle zurückgegriffen wird, die für den bestimmten Reibeinheit-Typ Kennfrequenz-Referenzwerte enthält, wobei die Kennfrequenzen für die Tabelle des Reibeinheit-Typs anhand einer Reibeinheit dieses Typs ermittelt werden, indem dieser Reibeinheit-Typ mit Schwingungen definierter Frequenz beaufschlagt wird und die sich daraus ergebenden Eigenschwingungen der Reibeinheit sowie sich ergebende Eigenschwingungen unter Eingriff in die Geometrie deren Reibbelags gemessen werden, und wobei bei einer Abweichung der sich ergebenden Eigenschwingungen von einem vordefinierten, geräuscharmen Schwingungsbereich die Geometrie des produzierten Reibbelags anhand der Tabellenwerte geändert wird, um das Eigenschwingungsverhalten so zu ändern, dass nach der Bearbeitung der Bereich der Eigenschwingungen in den definierten Schwingungsbereich, frei von Resonanzgeräuschen, fällt.

Durch Messung von Kennfrequenzen und die anschließend gezielte Einflussnahme auf den Reibbelag der Reibeinheit zur Einstellung der definierten Eigenfrequenz kann eine Geräuschentstehung in der späteren Anwendung verhindert werden. Erfindungsgemäß wird die Eigenfrequenzmessung durch eine Kennfrequenzmessung in der Serie ersetzt.

Soweit in den vorliegenden Unterlagen Reibeinheiten angesprochen sind, so kann es sich hierbei insbesondere um Teile von Bremsen, zum Beispiel Bremsklötze, und um Teile von Kupplungen, beispielsweise Kupplungsscheiben, handeln, die jeweils zumindest aus einer Trägerplatte und einer daran gehaltenen Reibeinheit aufgebaut sind.

Mit der Kennfrequenz korrelierend zur entsprechenden Eigenfrequenz kann während des Produktionsprozesses von Reibbelägen eine Schwingungsanalyse durchgeführt werden mit dem Ziel, den Reibbelag anschließend auf eine für die spätere Verwendung positive Eigenfrequenz anzupassen, ohne die anderen erforderlichen Eigenschaften zu verändern.

Durch die vorhandenen, vorab festgelegten Kennfrequenzgrenzen können die produzierten Serienbeläge bzw. serienmäßig hergestellten Reibeinheiten überprüft werden. Nähern sich die Reibeinheiten diesen Kennfrequenzgrenzen, kann durch eine nachgeschaltete Bearbeitung die Kennfrequenz, z. B. durch Nachbearbeitung der in den Belag eingebrachten Nuten, zum Beispiel deren Tiefen, Breiten und Formen, geändert werden. Ferner kann die Kennfrequenz durch ein Bearbeiten eines Randbereichs des Belags geändert werden. So kann der Randbereich des Reibbelags wenigstens teilweise abgerundet und/ oder ausgehend von einer zu der Bremsscheibe weisenden Kontaktfläche in Richtung zur Trägerplatte schräg verlaufen. Bei der Kontaktfläche handelt es sich um die Fläche des Reibbelags, der in Reibkontakt mit der Bremsscheibe kommen kann. Natürlich können alternativ oder zusätzlich beliebig geformte Ausnehmungen in dem Reibbeilag zur Änderung der Kennfrequenz vorgesehen werden. Es ist ebenfalls möglich, die zur Bremsscheibe weisende Kontaktfläche des Reibbelags partiell oder insgesamt schräg auszubilden. D.h., dass der Reibbelag derart ausgebildet ist, dass sich der Abstand zwischen der Kontaktfläche des Reibbelags und der Bremsscheibe, ausgehend von einer Kante des Reibbelags bis zu einer dieser Kante gegenüberliegenden Kante wenigstens teilweise verändert, wenn der Reibbelag nicht in Reibkontakt mit der Bremsscheibe ist.

Der Grad der vorgenommenen Bearbeitung entspricht der zu dieser Bearbeitung korrelierten Kennfrequenzverschiebung. Anhand von abgestuften Bearbeitungsmustern lässt sich eine Korrelation zwischen Bearbeitungsgrad und Frequenzverschiebung über einen weiten Kennfrequenzbereich definieren, so dass eine erneute Überprüfung nach der Bearbeitung entfällt. Am Ende liegt ein Bremsbelag vor, der nach dem Pressen und Härten durch die anschließende Messung und dem eventuell erforderlichen Arbeitsschritt eine Frequenzverschiebung in den, für die spätere Applikation, sichereren Frequenzbereich erfährt, das bedeutet in einen Frequenzbereich, der nicht zu hörbaren Geräuschen führt.

Die Veränderung der Kennfrequenz kann beispielsweise durch eine mechanische Nachbearbeitung erfolgen oder durch Anbringung von zusätzlichen Massen oder durch Aufkleben von entsprechend abgestimmten Dämpfungselementen. Bevorzugt ist jedoch eine Nachbearbeitung des Reibbelags, bei der an bestimmten definierten Stellen Material abgetragen wird.

Wesentlich für das erfindungsgemäße Verfahren ist, dass zur Einstellung der Eigenfrequenz einer Reibeinheit zunächst verschiedene Frequenzmuster hergestellt werden. Hierzu werden zum Beispiel Eingriffe in die Geometrie oder zum Beispiel Änderungen der Dichte des Belag- bzw. Reibmaterials vorgenommen. Diese Frequenzmuster haben dann eine Abstufung in der Eigenfrequenz. Mit diesen Mustern werden in praktischen Tests Grenzmuster bestimmt, das bedeutet Muster-Geometrien, bei denen aufgrund ihrer Eigenfrequenz Geräusche im Betrieb der Reibeinheit entstehen.

Solche Grenzmuster sind deshalb als Muster definiert, die die Ober- und Untergrenze der Eigenfrequenz bestimmen, bei denen die Reibeinheit noch geräuschfrei betrieben werden kann. Anhand dieser Grenzmuster wird die korrelierende Kennfrequenz ermittelt.

Soweit in den vorliegenden Unterlagen auf die Kennfrequenzmessung verwiesen wird, bedeutet dies, dass die Reibeinheit bzw. der Reibbelag nicht frei schwingend, sondern eingespannt, gemessen wird, z. B. adäquat so, wie die Reibeinheit bzw. Reibbelag in der Reibeinheit eingespannt ist. Das lose oder freie Ende kann beispielsweise mit einem Shaker, das bedeutet einer Schwingspule, basierend auf dem Lautsprecherprinzip, angeregt werden und die Resonanzstellen werden über die Leistungsaufnahme der Spule oder über einen Beschleunigungsaufnehmer bestimmt.

Ein einmal angeregtes Bauteil hat beim Durchlaufen des Frequenzbandes der abklingenden Schwingung mindestens eine, oft sogar mehrere, Resonanzfrequenzen, die bei Vernachlässigung der Dämpfung den Eigenfrequenzen entsprechen. Resonanzen entstehen bei den Frequenzen, bei denen durch eine Eigenverstärkung des Bauteils besonders große Amplituden auftreten. Zu dieser Eigenfrequenz ist die Kennfrequenz korreliert, die die gleichen durch das Einspannen in ihrer Frequenz verschobenen Resonanzstellen aufweist.

Ist das Bauteil ein Freischwinger, also ohne jegliche äußere Beeinflussung, außer der Anregung (z. B. aufgehängt an einem dünnen Seil), bezeichnet man die Frequenz an diesen Resonanzstellen als Eigenfrequenzen.

Ist das Bauteil jedoch in irgendeiner Weise vorgespannt, spricht man an den auftretenden Resonanzstellen von der Kennfrequenzen, die nur in diesem von Freiheitsgraden eingeschränkten Zustand vorliegen.

Bei definierter Einspannung lässt sich daher die Kennfrequenz zur Eigenfrequenz korrelieren. Aufgrund der geringeren Freiheitsgrade bei der Kennfrequenzmessung werden auch nicht relevante Oberschwingungen unterbunden, wodurch sich eine bessere Reproduzierbarkeit der Resonanzstellen ergibt.
In einer Ausgestaltung des Verfahrens wird die Reibeinheit mittels Schwingungsgenerator angeregt. Diese Maßnahme ist dahingehend vorteilhaft, dass ein gezielt eingeschränktes Frequenzband durchfahren werden kann, was zusätzlich eine stark reduzierte Messzeit zur Folge hat.

Die Eigenschwingung der Reibeinheit kann durch Messung der Amplitude des Schwingungsgenerators ermittelt werden. Hierbei ist eine bevorzugte Maßnahme diejenige, dass die Eigenschwingungen der Reibeinheit durch Messung der Leistungsaufnahme des Schwingungsgenerators ermittelt werden.

Falls die gemessene Kennfrequenz nicht der ermittelten geräuschfreien Eigenschwingung entspricht, wird der Reibbelag vorzugsweise mechanisch durch vorzugsweise Variation der Tiefe und/oder der Breite einer in den Reibbelag eingebrachten Nut bearbeitet, um die Eigenschwingungen auf den geforderten Wert einzustellen.

Für die Einstellung der Eigenschwingung kann auch der Reibbelag mechanisch bearbeitet werden, indem seine Dicke verändert wird.

Für die Einstellung der Eigenschwingungen der jeweiligen Reibeinheiten, insbesondere für das Maß der mechanischen Bearbeitung des Reibbelags, kann auf eine zuvor aufgestellte Korrelationstabelle zurückgegriffen werden. In dieser Korrelationstabelle sind vorab gemessene Werte für jeweilige Abweichungen der Eigenschwingungen von dem vordefinierten Schwingungsbereich der jeweils gemessenen Reibeinheiten zu dem Grad einer vorzunehmenden mechanischen Bearbeitung des Reibbelags in Bezug gesetzt.

### Ausführungsbeispiele

Weitere Ziele, Merkmale sowie vorteilhafte Anwendungsmöglichkeiten der vorliegenden Erfindung werden anhand der nachfolgenden Beschreibung von Ausführungsbeispielen anhand der Zeichnungen erläutert. Dabei bilden sämtliche wörtlich beschriebenen und/oder bildlich dargestellten Merkmale in ihrer sinnvollen Kombination den Gegenstand der vorliegenden Erfindung; auch unabhängig von den Patentansprüchen und deren Rückbezügen.

In der Zeichnung zeigt
- Figur 1: ein Flussdiagramm, das zur Erläuterung des erfindungsgemäßen Verfahrens herangezogen wird,
- Figur 2: eine Vorrichtung, um Kennfrequenzen von Reibeinheiten zu ermitteln,
- Figur 3: eine Draufsicht auf eine Bremseinheit mit in der Reibfläche eingebrachter Nut,
- Figur 4: eine erste Querschnittsdarstellung der Nut des Bremsbelags der Figur 3, und
- Figur 5: eine zweite Querschnittsdarstellung der Nut des Bremsbelags der Figur 3.
- Figur 6: eine Seitenansicht der Reibeinheit gemäß einer weiteren Ausführungsform, bei der der Reibbelag schräg ausgebildet ist,
- Figur 7: eine Draufsicht auf die Reibeinheit gemäß einer weiteren Ausführungsform, bei der ein Randbereich des Reibbelags schräg ausgebildet ist,
- Figur 8: eine Draufsicht auf die Reibeinheit gemäß einer weiteren Ausführungsform. bei der ein Randbereich des Reibbelags schräg ausgebildet und eine Ausnehmung in dem Reibbelag vorgesehen ist,
- Figur 9: eine Draufsicht auf die Reibeinheit gemäß einer weiteren Ausführungsform, bei der ein Randbereich des Reibbelags abgerundet ist.

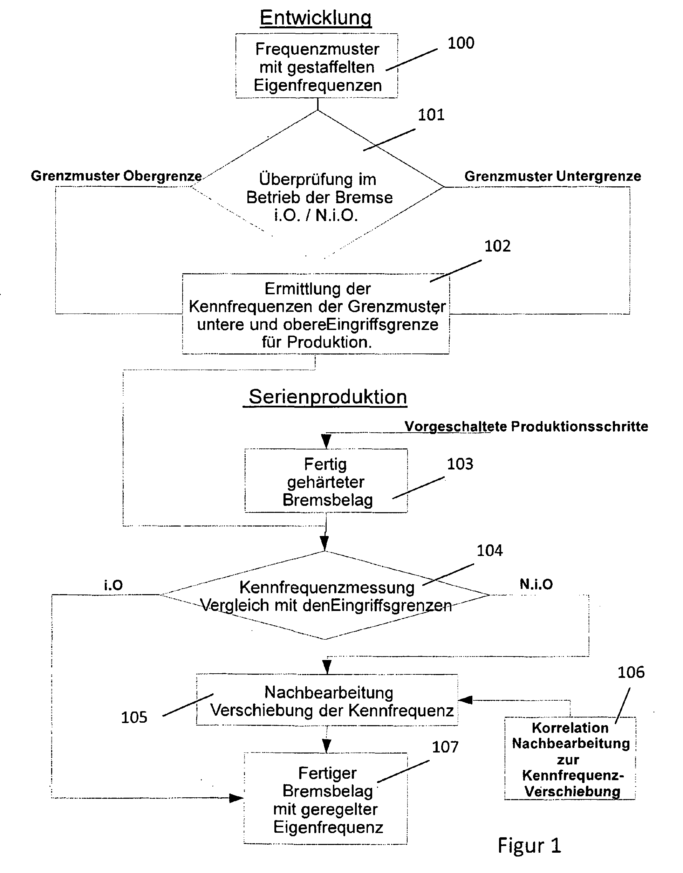

Das Verfahren, wie es in Figur 1 anhand eines Flussdiagramms dargestellt ist, dient zur Ermittlung der Kennfrequenz von Reibeinheiten sowie zur Beeinflussung bzw. Einstellung der Kennfrequenz durch eine mechanische Bearbeitung des Reibbelags (Rohlings) während des Herstellungsprozesses.

Im Betrieb einer Reibeinheit, insbesondere einer Bremseinheit kann es vorkommen, dass es aufgrund von Resonanzen der Reibeinheit zu unerwünschten Geräuschen kommt. Daher ist es erforderlich, die Eigenfrequenz bzw. Kennfrequenz der Reibeinheit in einem Bereich zu halten, bei welchem diese störenden Geräusche nicht auftreten. Aus diesem Grund wird die Kennfrequenz der Reibeinheit bzw. des Rohlings ermittelt.

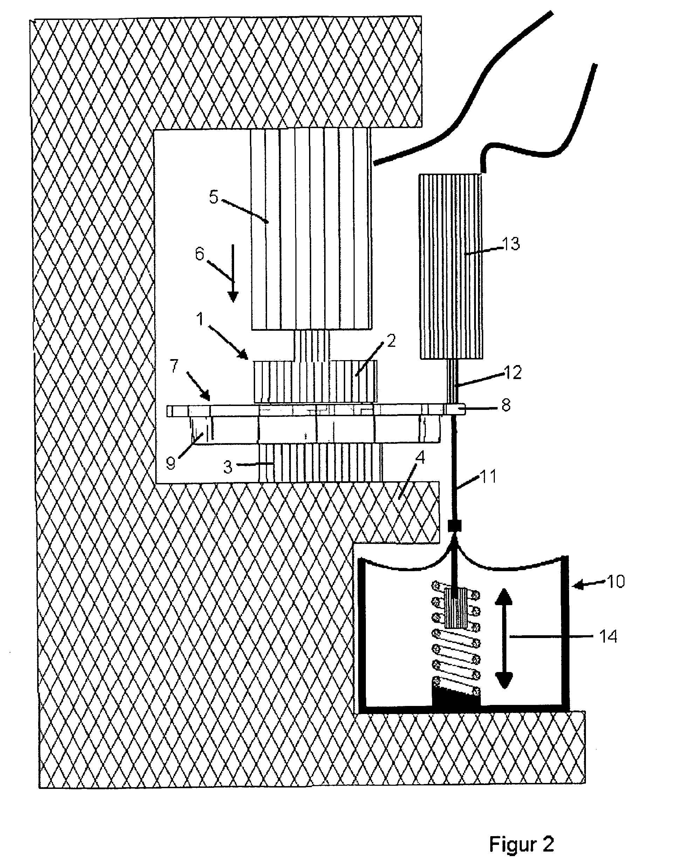

Hierzu kann eine Vorrichtung eingesetzt werden, wie sie schematisch in Figur 2 dargestellt ist. Diese Vorrichtung umfasst eine Spannvorrichtung 1 mit einem oberen Spannteil 2 und einem unteren Spannteil 3. Das untere Spannteil 3 ist einem ortsfesten Auflagetisch 4 zugeordnet, während das obere Spannteil 2 über einen Druckzylinder 5 in Richtung des Pfeils 6 verschiebbar ist. Zwischen dem unteren Spannteil 3 und dem oberen Spannteil 2 ist in dem gezeigten Beispiel eine Bremsbacke 7 etwa mittig eingespannt. Diese Bremsbacke 7 umfasst eine Trägerplatte 8, an der ein Reibbelag 9 gehalten ist. Die so eingespannte Reibeinheit kann mittels eines Schwingungsgenerators, der allgemein mit dem Bezugszeichen 10 bezeichnet ist, angeregt werden. Hierzu greift der Schwingungsgenerator 10 mit einem Halteteil 11 in die Trägerplatte 8 der Reibeinheit 7, und zwar am Rand der Trägerplatte 8, ein. Auf der gegenüberliegenden Seite ist die Trägerplatte 8 mit dem Kolben 12 eines Gegendruckzylinders 13 verbunden. Über den Schwingungsgenerator 10 und dessen Halteteil 11 kann die Trägerplatte 8 und damit die Reibeinheit 7 senkrecht zu der Fläche des Reibbelags 9 in definierte Schwingungen, angedeutet durch den Doppelpfeil 14, versetzt werden. Über den Gegendruckzylinder 13 wird während der Messphase der Kontakt der Trägerplatte 8 zum Halteteil 11 des Schwingungsgenerators 10 aufrechterhalten.

Durch Messung der Amplitude oder der Leistungsaufnahme des Schwingungsgenerators 10 kann auf die Eigen- bzw. Kennfrequenz der Bremsbacke bzw. Reibeinheit 7 geschlossen werden. Mit dieser Anordnung wird das Frequenzspektrum durchlaufen und die dabei auftretenden Resonanzfrequenzen der eingespannten Reibeinheit 7 ermittelt. Zur Ermittlung der Resonanzfrequenz kann die Leistungsaufnahme des Schwingungsgenerators als Referenzgröße herangezogen werden.

Während der Serienproduktion ist in jedem Fall eine mechanische Nachbearbeitung bzw. Endbearbeitung der Reibbeläge der Reibeinheiten erforderlich. Im Rahmen dieser mechanischen Bearbeitung des Reibbelags kann daher die Resonanzfrequenz, falls eine Resonanz auftritt und zu hoher Geräuschentwicklung führt, die zuvor ermittelt wurde, gezielt in einen Bereich verschoben werden, in dem keine unerwünschten Geräusche auftreten.

Vorgesehen ist, dass während der späteren Bearbeitung des Rohlings des Reibbelags 9 bzw. der Reibeinheit 7, während der auch Nuten in den Belag eingeschliffen werden, solche Nuten in ihrer Form, Breite und/oder Tiefe variiert werden, um dadurch das Schwingverhalten der Bremsbacke zu beeinflussen und entsprechend die Kennfrequenz in einen Bereich zu verschieben, in dem keine Resonanzen auftreten, die zu Geräuschen führen.

Für die Nachbearbeitung des Reibbelags wird auf zuvor ermittelte Referenzwerte für die Nuttiefe und Breite zurückgegriffen, die beispielsweise in einen Speicher abgelegt sind. Mit diesen Referenzwerten werden dann während der Nachbearbeitung des Reibbelags, abhängig von der Abweichung der Kennfrequenz von einem vorgegebenen Referenzwert, entsprechende Parameter für den Schleifvorgang eingestellt.

Es ist es auch möglich, die Dicke des Reibbelags beim späteren Schleifvorgang der Reibbelagoberfläche zu variieren und damit das Schwingungsverhalten der Reibeinheit zu verändern.

Gleiches gilt in geringerem Maße natürlich auch für die Randschrägen des Reibbelags 9 gegenüber der Trägerplatte 8.

Diese Abläufe sind in dem Flussdiagramm der Figur 1 gezeigt.

Das gesamte Verfahren ist in einen Abschnitt "Entwicklung" und einen Abschnitt "Serienproduktion" unterteilt.

In der Entwicklungsphase werden in einem Verfahrensschritt 100 für einen bestimmten Typ von Reibeinheiten, beispielsweise mit der Vorrichtung, wie sie in Figur 2 gezeigt ist, Frequenzmuster mit gestaffelten Eigenfrequenzen bestimmt. Gestaffelte Eigenfrequenzen bedeutet hierbei, dass Muster hergestellt werden, welche durch Bearbeitung gezielt unterschiedliche Eigenfrequenzen erhalten.

Die einzelnen Reibeinheiten werden dann in einem Schritt 101 im Betrieb einer Bremse überprüft. Diese Prüfung umfasst insbesondere die Geräuschentwicklung der Bremse bei unterschiedlichen Drehzahlen. Aus dieser Überprüfung werden eine Obergrenze und eine Untergrenze für Grenzmuster festgelegt.

Zu den Grenzmustern, betreffend die Obergrenze und die Untergrenze, werden dann abgestufte Bearbeitungsmuster festgelegt, die Werte für den mechanischen Eingriff in den Reibbelag umfassen, um die Eigenfrequenzen der Bremsbacke zu verschieben, wie dies im Schritt 102 mit "Ermittlung der Kennfrequenzen, der Frequenzmuster, untere und obere Eingriffsgrenze für die Produktion" angegeben ist.

In der Serienproduktion werden dann im Schritt 103 die produzierten, fertig ausgehärteten Bremsbeläge herangezogen.

Im Schritt 104 wird dann eine Kennfrequenzmessung vorgenommen. Die Messwerte werden dann mit den Eingriffsgrenzen verglichen.

Falls im Schritt 104 die Messwerte sich nicht innerhalb des Bereiches der Kennfrequenz der Grenzmuster befinden, erfolgt im Schritt 105 eine mechanische Nachbearbeitung des Reibbelags derart, dass eine Verschiebung der Kennfrequenz erreicht wird. Für eine solche Nachbearbeitung wird auf die Daten in der Tabelle 106 zurückgegriffen, die die erforderliche Korrelation einer Nachbearbeitung zur Kennfrequenz-Verschiebung beinhaltet.

Falls im Schritt 104 die Messung ergibt, dass sich die Messwerte innerhalb des Bereiches der Kennfrequenz der Grenzmuster befinden, wird die Entscheidung getroffen, dass der Bremsklotz in Ordnung ist, das bedeutet, er weist eine geregelte Eigenfrequenz auf, wie dies in dem Schritt 107 angegeben ist.

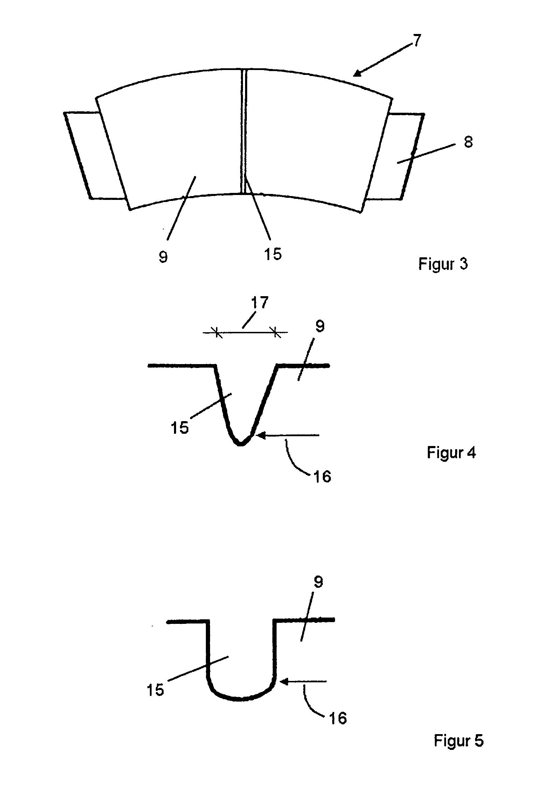

Figur 3 zeigt beispielhaft eine Reibeinheit bzw. Bremsbacke 7 mit Trägerplatte 8 und Reibbelag 9, wie sie auch in der Anordnung der Figur 2 eingesetzt ist. Beispielhaft ist in die Oberfläche des Reibbelags 9 eine Nut 15 eingefräst.

Die Figur 4 zeigt eine V-förmige Nut 15, die an der mit dem Pfeil 16 gekennzeichneten Stelle eine Breite von 1,7 mm besitzt, während die Breite 17 im Bereich der Oberfläche des Reibbelags 9 einen Wert von 2,3 mm hat. Dieser Bremsbacken 7 wurde mit der Vorrichtung der Figur 2 gemessen. Danach wurde die Nut zu einer Form verändert, die in Figur 5 dargestellt ist, die eine in etwa U-förmige Form zeigt und auch im unteren Bereich eine Breite 16 von 2,3 mm aufwies. Durch die Veränderung der Nutform der Figur 4 zu der Nutform der Figur 5 konnte die Frequenz um 8 Hertz gesenkt werden Das Beispiel der Figuren 4 und 5 zeigt, wie die Kennfrequenzen zu unterschiedlichen Bearbeitungsstufen des Reibbelags in Relation gesetzt werden können, um daraus eine Tabelle mit Referenzwerten aufzustellen, auf die während der Nachbearbeitung der Reibbeläge während der Serienproduktion zurückgegriffen wird.

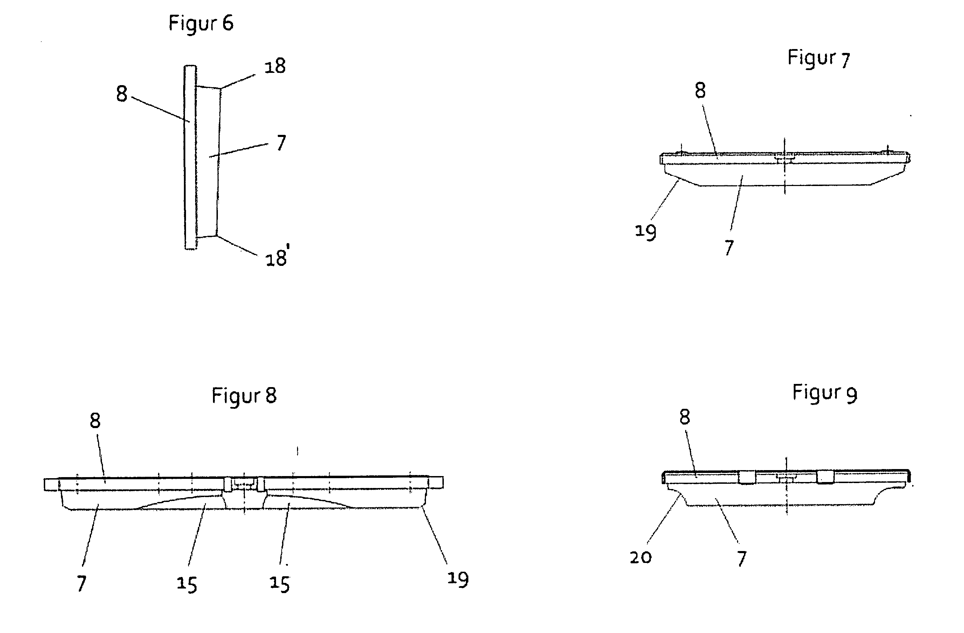

In den Figuren 6 bis 9 werden weitere Möglichkeiten für eine Bearbeitung des Reibbelags 7 dargestellt. So weist der in Figur 6 gezeigte Reibbelag 7 einen schrägen Verlauf auf. Genauer gesagt ist der Reibbelag 7 derart bearbeitet, dass sich der Abstand zwischen der Kontaktfläche des Reibbelags 7 und einer nicht gezeigten Bremsscheibe ausgehend von einer ersten Kante 18 bis zu der der ersten Kante 18 gegenüberliegenden zweiten Kante 18' vergrößert. Der in Figur 7 gezeigte Reibbelag 7 weist einen Randbereich 19 auf, der einen schrägen Verlauf aufweist. Der in Figur 8 gezeigte Reibbelag 7 weist ebenfalls einen schrägen Randbereich 19 auf. Des Weiteren weist der in Figur 8 gezeigte Reibbelag 7 auch zwei Ausnehmungen 15 auf. Der in Figur 9 gezeigte Reibbelag 7 weist einen abgerundeten Randbereich 20 auf.

### Bezugszeichenliste

| | |
|---|---|
| 1 | Spannvorrichtung |
| 2 | oberes Spannteil |
| 3 | unteres Spannteil |
| 4 | Auflagetisch |
| 5 | Druckzylinder |
| 6 | Pfeil |
| 7 | Reibeinheit |
| 8 | Trägerplatte |
| 9 | Reibbelag |
| 10 | Schwingungsgenerator |
| 11 | Halteteil |
| 12 | Kolben |
| 13 | Gegendruckzylinder |
| 14 | Doppelpfeil |
| 15 | Nut |
| 16 | Pfeil |
| 17 | Pfeil |
| 18, 18' | Kante |
| 19 | schräger Randbereich |
| 20 | abgerundeter Randbereich |

## Patentansprüche

1. Verfahren zum Vermindern bzw. Vermeiden von Resonanzgeräuschen einer produzierten Reibeinheit, die eine Trägerplatte mit einem daran gehaltenen Reibbelag aufweist,
bei dem das Eigenschwingungsverhalten (Kennfrequenzmessung) der jeweiligen produzierten Reibeinheiten ermittelt wird und bei Auftreten von Resonanzgeräuschen eine mechanische Nachbearbeitung des Reibbelags erfolgt, wobei für die Nachbearbeitung auf zuvor ermittelte Werte zurückgegriffen wird, die für den bestimmten Reibeinheit-Typ Kennfrequenz-Referenzwerte enthält,
wobei die ermittelten Kennfrequenzen für eine Tabelle des Reibeinheit-Typs anhand einer Reibeinheit dieses Typs ermittelt werden, indem dieser Reibeinheit-Typ mit Schwingungen definierter Frequenz beaufschlagt wird und die sich daraus ergebenden Eigenschwingungen der Reibeinheit sowie sich ergebende Eigenschwingungen unter Eingriff in die Geometrie deren Reibbelags gemessen werden, und
wobei bei einer Abweichung der sich ergebenden Eigenschwingungen von einem vordefinierten, geräuscharmen Schwingungsbereich die Geometrie des produzierten Reibbelags anhand der Tabellenwerte geändert wird, um das Eigenschwingungsverhalten so zu ändern, dass nach der Bearbeitung der Bereich der Eigenschwingungen in den definierten Schwingungsbereich, frei von Resonanzgeräuschen, fällt.

2. Verfahren nach Anspruch 1, **dadurch gekennzeichnet, dass** die Eigenschwingungen der Reibeinheit mittels Schwingungsgenerator angeregt werden.

3. Verfahren nach Anspruch 2, **dadurch gekennzeichnet, dass** die Eigenschwingungen der Reibeinheit durch Messung der Amplitude des Schwingungsgenerators ermittelt werden.

4. Verfahren nach Anspruch 2, **dadurch gekennzeichnet, dass** die Eigenschwingungen der Reibeinheit durch Messung der Leistungsaufnahme des Schwingungsgenerators ermittelt werden.

5. Verfahren nach einem der Ansprüche 1 bis 4, **dadurch gekennzeichnet, dass** die Geometrie des Reibbelags durch Variation der Tiefe und/oder der Breite einer in den Reibbelag eingebrachten Nut geändert wird, um die Eigenschwingungen einzustellen.

6. Verfahren nach einem der Ansprüche 1 bis 5, **dadurch gekennzeichnet, dass** die Geometrie des Reibbelags mechanisch durch Ändern der Dicke des Reibbelags geändert wird, um die Eigenschwingungen einzustellen.

7. Verfahren nach einem der Ansprüche 1 bis 6, **dadurch gekennzeichnet, dass** für das Maß der Veränderung der Geometrie des Reibbelags auf eine Tabelle zurückgegriffen wird, in der die Abweichung der Eigenschwingung des Reibbelags von dem vordefinierten Schwingungsbereich zu dem Grad einer vorzunehmenden Veränderung der Geometrie korreliert ist.

## Claims

1. Method for reducing or avoiding resonant noise of a produced friction unit which has a carrier plate with a friction lining held thereon,
in which the natural vibration behaviour (characteristic frequency measurement) of the respective friction units produced is determined and, when resonant noise occurs, mechanical re-machining of the friction lining is carried out, reference being made for the re-machining to previously determined values which contain characteristic frequency reference values for the specific friction unit type,
the characteristic frequencies determined being determined for a table of the friction unit type by using a friction unit of this type, by vibrations of defined frequency being applied to this friction unit type and the natural vibrations of the friction unit that result from this and resulting natural vibrations when an intervention is made in the geometry of its friction lining being measured, and
in the event of a deviation of the resulting natural vibrations from a predefined low-noise vibration range, the geometry of the friction lining produced being changed by using the table values, in order to change the natural vibration behaviour in such a way that, following the machining, the range of natural vibrations falls in the defined vibration range, free of resonant noise.

2. Method according to Claim 1, **characterized in that** the natural vibrations of the friction unit are excited by means of vibration generators.

3. Method according to Claim 2, **characterized in that** the natural vibrations of the friction unit are determined by measuring the amplitude of the vibration generator.

4. Method according to Claim 2, **characterized in that** the natural vibrations of the friction unit are determined by measuring the power consumption of the vibration generator.

5. Method according to one of Claims 1 to 4, **characterized in that** the geometry of the friction lining is changed by varying the depth and/or width of a groove introduced into the friction lining in order to adjust the natural vibrations.

6. Method according to one of Claims 1 to 5, **characterized in that** the geometry of the friction lining is changed mechanically by changing the thickness of the friction lining in order to adjust the natural vibrations.

7. Method according to one of Claims 1 to 6, **characterized in that**, for the extent of the change of the geometry of the friction lining, reference is made to a table in which the deviation of the natural vibration of the friction lining from the predefined vibration range is correlated with the level of a change in the geometry which is to be made.

## Revendications

1. Procédé destiné à diminuer ou éviter les bruits de résonance d'une unité de frottement produite qui présente une plaque de support sur laquelle est maintenue une couche de frottement,
dans lequel le comportement d'auto-vibration (mesure de la fréquence caractéristique) des différentes unités de frottement produites est déterminé et un traitement mécanique de finition de la couche de frottement a lieu en cas d'apparition de bruits de résonance, le traitement de finition étant basé sur des valeurs déterminées préalablement qui contiennent des valeurs de référence de la fréquence caractéristique du type particulier d'unité de frottement,
les fréquences caractéristiques déterminées étant déterminées pour un tableau des types d'unité de frottement à l'aide d'une unité de frottement de ce type en appliquant sur ce type d'unité de frottement des vibrations de fréquence définie, les vibrations propres de l'unité de frottement qui en résultent ainsi que les vibrations propres qui surviennent étant mesurées tout en agissant sur la géométrie de sa couche de frottement,
en cas d'écart entre les vibrations propres qui surviennent par rapport à une plage prédéfinie de vibrations peu bruyantes, la géométrie de la couche de frottement produite est modifiée à l'aide des valeurs du tableau pour modifier le comportement d'auto-vibration de telle sorte qu'après le traitement, la plage des vibrations propres revienne dans la plage de vibrations définies, exempte de bruits de résonance.

2. Procédé selon la revendication 1, **caractérisé en ce que** les vibrations propres de l'unité de frottement sont excitées au moyen d'un générateur de vibrations.

3. Procédé selon la revendication 2, **caractérisé en ce que** les vibrations propres de l'unité de frottement sont déterminées par mesure de l'amplitude du générateur de vibrations.

4. Procédé selon la revendication 2, **caractérisé en ce que** les vibrations propres de l'unité de frottement sont déterminées par mesure de la puissance absorbée par le générateur de vibrations.

5. Procédé selon l'une des revendications 1 à 4, **caractérisé en ce que** la géométrie de la couche de frottement est modifiée par modification de la profondeur et/ou de la largeur d'une rainure ménagée dans la couche de frottement, en vue d'ajuster les vibrations propres.

6. Procédé selon l'une des revendications 1 à 5, **caractérisé en ce que** la géométrie de la couche de frottement est modifiée mécaniquement par modification de l'épaisseur de la couche de frottement, en vue d'ajuster les vibrations propres.

7. Procédé selon l'une des revendications 1 à 6, **caractérisé en ce que** pour la mesure de la modification de la géométrie de la couche de frottement, on se réfère à un tableau dans lequel l'écart entre la vibration propre de la couche de frottement et la plage prédéfinie de vibrations est corrélé au degré de la modification de la géométrie qui doit être réalisée.
